# EUROPÄISCHE PATENTANMELDUNG

(11) **EP 3 438 817 A1**
(43) Veröffentlichungstag der Anmeldung: **06.02.2019**
(21) Anmeldenummer: 17183987.1
(22) Anmeldetag: 31.07.2017
(51) Int. Cl.: G06F 9/45, G06F 9/44

(54) **VERFAHREN ZUR ERZEUGUNG VON QUELLCODE**

(71) Anmelder: dSPACE digital signal processing and control engineering GmbH, 33102 Paderborn (DE)
(72) Erfinder: Mair, Michael, 33378 Rheda-Wiedenbrück (DE); Trautmann, Wolfgang, 33102 Paderborn (DE)

(57) **Zusammenfassung**

Die Erfindung betrifft ein Verfahren zum Erzeugen von Quellcode aus einem oder mehreren Blöcken eines Blockdiagramms, welches ein Modell eines dynamischen Systems mit mindestens einer gerichteten Verbindung zwischen zwei Blöcken umfasst, wobei das Blockdiagramm ausgeführt werden kann, um das dynamische System zu simulieren, und wobei in dem Blockdiagramm mindestens eine Region definiert ist, in der ein oder mehrere Blöcke liegen. Das Blockdiagramm umfasst einen ersten Block und einen zweiten Block, wobei der erste Block eine erste Blockvariable und der zweite Block eine zweite Blockvariable aufweist, wobei jede Blockvariable des Blockdiagramms einen Bezeichner aufweist. Der Bezeichner der ersten Blockvariable wird mit dem Bezeichner der zweiten Blockvariable verglichen, und es wird überprüft, ob der erste Block und der zweite Block in der gleichen Region liegen. Die erste Blockvariable und die zweite Blockvariable werden im Quellcode als eine einzige Variable implementiert, wenn die Bezeichner übereinstimmen und die Blöcke in einer Region liegen. Sofern die Bezeichner verschieden sind und/oder die Blöcke nicht in der gleichen Region liegen, werden die erste Blockvariable und die zweite Blockvariable im Quellcode als zwei getrennte Variablen implementiert. Weiterhin betrifft die Erfindung ein Verfahren zum Konfigurieren eines Steuergeräts, ein Computerprogrammprodukt und ein Computersystem.

## Beschreibung

Die Erfindung betrifft die Erzeugung von ausführbarem Code aus einem Blockdiagramm, insbesondere für die Programmierung von Steuergeräten.

Steuergeräte werden in einer Vielzahl von Anwendungen eingesetzt, um physikalische Größen eines Prozesses zu erfassen und/oder mittels angeschlossener Aktuatoren auf einen Prozess einzuwirken; beispielsweise kann es sich um eine Antiblockierregelung eines Bremsvorgangs handeln. Die das dynamische Verhalten des Prozesses bestimmenden Zeitkonstanten bedingen häufig Zykluszeiten von 1 ms oder kürzer, so dass eine Echtzeitfähigkeit des Steuergeräts erforderlich ist. Aus Kostengründen weisen Steuergeräte häufig Mikrocontroller mit geringem Speicher und beschränkter Rechenleistung auf, weshalb der Größe und Effizienz des ausführbaren Codes eine große Bedeutung zukommt.

Um den Entwurf von Steuergeräten zu beschleunigen, werden Kontrollstrategien häufig anhand von Modellen in einer Rechenumgebung wie MATLAB/Simulink entwickelt. Somit können Prozess und Regler bzw. allgemein das Verhalten des Steuergeräts zunächst simuliert und das Vorliegen von gewünschten Eigenschaften überprüft werden. Aus den Modellen kann mittels eines Codegenerators direkt Quellcode für die Programmierung des Steuergeräts erzeugt werden. Beispielsweise ist aus dem Dokument "Production Quality Code Generation from Simulink Block Diagrams", Proceedings of the 1999 International Symposium on Computer Aided Control System Design, Kohala Coast, Hawai'i, von H. Hanselmann et al. ein Codegenerator für die Erzeugung von Quellcode in Produktionsqualität bekannt.

Wenn Modelle in Form eines Blockdiagramms beschrieben werden, wobei Blöcke zum Austausch von Daten bzw. dem Weiterleiten von Signalen über gerichtete Verbindungen verknüpft sind, besteht ein übliches Vorgehen der Codeerzeugung darin, für jeden Ausgang eines Blocks eine Variable im Quellcode zu erzeugen. In der Regel entstehen dabei mehr Blockvariablen als wirklich erforderlich sind, so dass Raum für Optimierungen besteht. Eine mögliche Optimierung besteht darin, die Blockvariablen verschiedener Blöcke auf eine gemeinsame Variable im Quellcode abzubilden. Allerdings ist dieses auch als "Mergen" bekannte Zusammenfassen von Blockvariablen nicht ungefährlich, denn die Weiterverwendung einer Variablen in mehreren Blöcken kann insbesondere durch eine Veränderung des Datenflusses im Quellcode zu unerwünschten Seiteneffekten führen.

Vor diesem Hintergrund ist es eine Aufgabe der vorliegenden Erfindung, den Stand der Technik weiterzuentwickeln und insbesondere eine Erzeugung von kompakterem Quellcode unter Vermeidung von unerwünschten Seiteneffekten zu unterstützen.

Diese Aufgabe wird durch ein Verfahren zum Erzeugen von Quellcode nach Anspruch 1, ein Computerprogrammprodukt nach Anspruch 13 und ein Computersystem nach Anspruch 14 gelöst. Vorteilhafte Weiterbildungen sind Gegenstand der abhängigen Unteransprüche.

Es wird also ein Verfahren zum Erzeugen von Quellcode aus einem oder mehreren Blöcken eines Blockdiagramms bereitgestellt, wobei das Blockdiagramm ein Modell eines dynamischen Systems mit mindestens einer Signalverbindung zwischen zwei Blöcken umfasst und ausgeführt werden kann, um das dynamische System zu simulieren. In dem Blockdiagramm ist mindestens eine Region definiert, in der ein oder mehrere Blöcke liegen, wobei das Blockdiagramm einen ersten Block und einen zweiten Block umfasst, wobei der erste Block eine erste Blockvariable und der zweite Block eine zweite Blockvariable aufweist, wobei jede Blockvariable des Blockdiagramms einen Bezeichner aufweist, wobei der Bezeichner der ersten Blockvariable mit dem Bezeichner der zweiten Blockvariable verglichen wird, wobei überprüft wird, ob der erste Block und der zweite Block in der gleichen Region liegen, und wobei die erste Blockvariable und die zweite Blockvariable im Quellcode als eine einzige Variable implementiert werden, wenn die Bezeichner übereinstimmen und die Blöcke in einer Region liegen, und wobei die erste Blockvariable und die zweite Blockvariable im Quellcode als zwei getrennte Variablen implementiert werden, wenn die Bezeichner verschieden sind und/oder die Blöcke nicht in der gleichen Region liegen.

Über eine Signalverbindung können Daten bzw. Signale übertragen werden; hierbei gibt ein erster Block einen Wert oder je nach Definition mehrere zusammengehörige Werte aus und ein zweiter Block empfängt diese und berücksichtigt sie bei der Ermittlung von einem oder mehreren zusammengehörigen Ausgabewerten des zweiten Blocks. Signale können skalare Variablen und/oder strukturierte Datentypen wie Arrays enthalten, wie dies beispielsweise bei einem Bus der Fall ist.

Blockvariablen können explizit im Block definiert sein oder automatisch erzeugt werden, beispielsweise anhand einer Signalverbindung. Die Namen von Blockvariablen können fest vorgegeben oder anhand von Erzeugungsregeln mit oder ohne vorgegebenem Ausweichverhalten definiert sein. Somit können Bezeichner immer fest bleiben, oder im Falle eines Konflikts von mehreren übereinstimmenden Bezeichnern wird mindestens ein Bezeichner nach einer vorgegebenen Regel modifiziert. Zweckmäßigerweise ist es vorgesehen, dass zwei Variablen, welche feste übereinstimmende Bezeichner haben, vorzugsweise dann zusammengefasst werden, wenn eine oder mehrere Zulässigkeitsbedingungen erfüllt sind.

Anhand der Definition von Regionen kann gesteuert werden, ob und in welcher Umgebung Blockvariablen zusammengefasst werden dürfen. Somit kann ein Zusammenfassen von Variablen in semantisch unkorrelierten Bereichen des Blockdiagramms ausgeschlossen werden. Dies vermeidet schwer zu findende Seiteneffekte durch erratische Veränderungen des Datenflusses.

Bevorzugt sind Blockdiagramme hierarchisch definiert, wobei ein Block in einer höheren Ebene mehrere Blöcke einer untergeordneten Ebene umfassen kann, wobei Blöcke einer untergeordneten Ebene einem Block einer höheren Ebene zugeordnet sind. Zweckmäßigerweise gehört also jeder Block einer untergeordneten Ebene zu einem Block einer höheren Ebene. Blöcke können mittels zugeordneter Blöcke in untergeordneten Ebenen definiert sein oder einfache Blöcke ohne Unterstruktur sein. Eine hierarchische Struktur des Blockdiagramms verbessert die Übersicht.

Besonders bevorzugt umfasst das Blockdiagramm einen oder mehrere Definitionsblöcke, wobei eine Region anhand von einem Definitionsblock derart definiert ist, dass der den Definitionsblock umfassende Block der nächsthöheren Ebene und alle diesem umfassenden Block zugeordneten Blöcke in der Region liegen. Der umfassende Block der nächsthöheren Ebene kann insbesondere als ein Subsystem ausgebildet sein. Vorzugsweise werden Blöcke, welche nicht in einer von einem Definitionsblock aufgespannten Region liegen, einer zusätzlichen Region zugeordnet, so dass jeder Block des Blockdiagramms in einer Region liegt. Alternativ kann es auch vorgesehen sein, dass nur solche Blöcke, die in einer von einem Definitionsblock definierten Region liegen, zusammengefasst werden dürfen.

Definitionsblöcke können dediziert nur für die Definition einer Region bestimmt sein. Es kann aber auch vorgesehen sein, bestimmten semantischen Blöcken gleichzeitig die Eigenschaft eines Definitionsblocks zuzuweisen. Insbesondere kann es sich dabei um Funktionsblöcke handeln, welche also anzeigen, dass das umgebende Subsystem im Quellcode als eine Funktion implementiert werden soll und vorzugsweise weitere Eigenschaften der Funktion definieren. Da eine Funktion im Quelltext eine Einheit bildet, ist es beispielsweise im Hinblick auf die Übersichtlichkeit zweckmäßig, ein Zusammenfassen von Variablen auf diese Einheit zu beschränken. Wenn das Blockdiagramm dazu eingesetzt wird, eine AUTOSAR-Softwarekomponente zu modellieren, kann insbesondere auch einem Runnable-Block zur Definition eines Runnables als eigenständiger Untereinheit der Softwarekomponente die Eigenschaft eines Definitionsblocks zugeordnet werden.

Ganz besonders bevorzugt umfasst das Blockdiagramm mindestens zwei Definitionsblöcke, welche von einem gemeinsamen Block einer höheren Ebene umfasst sind, wobei ein erster Definitionsblock in einer ersten Ebene und ein zweiter Definitionsblock in einer gegenüber der ersten Ebene untergeordneten zweite Ebene angeordnet ist, wobei der erste Block eine erste Region definiert und wobei der zweite Block eine zweite Region derart definiert, dass der den zweiten Definitionsblock umfassende Block der gegenüber der zweiten Ebene nächsthöheren Ebene sowie alle diesem Block zugeordneten Blöcke in der zweiten Region liegen. Prinzipiell kann die zweite Ebene mehrere Hierarchiestufen unterhalb der ersten Ebene angeordnet sein. Dies ermöglicht eine gezieltere Steuerung, in welchen Regionen Variablen zusammengefasst werden dürfen.

Insbesondere kann es mindestens zwei Sorten von Definitionsblöcken geben, wobei eine Sorte ausgezeichneter Definitionsblöcke definiert ist, wobei in dem Fall, dass der erste Definitionsblock ein ausgezeichneter Definitionsblock ist, die erste Region und die zweite Region zu einer gemeinsamen Region zusammengefasst werden, und wobei ansonsten die erste Region und die zweite Region als getrennte Regionen behandelt werden. Beispielsweise kann ein Funktionsblock oder ein Runnable-Block als ein ausgezeichneter Definitionsblock definiert werden. Indem ein Zersplittern der klar umgrenzten einheitlichen Region einer Funktion bzw. eines Runnables verhindert wird, bleibt die Optimierbarkeit des Blockdiagramms erhalten.

Es ist vorteilhaft, wenn der Bezeichner einer Blockvariable anhand einer Auswertung von mindestens einer Erzeugungsvorschrift bestimmt wird, wobei die Erzeugungsvorschrift den Bezeichner der Blockvariable anhand des Blocks einer höheren Ebene, in welchem der die Blockvariable aufweisende Block umfasst ist, und/oder anhand der Region, in welcher der die Blockvariable aufweisende Block liegt, bestimmt, und dass die Überprüfung, ob zwei Blöcke in der gleichen Region liegen, anhand eines Vergleichs der Bezeichner der Blockvariablen erfolgt. Beispielsweise kann der Bezeichner zumindest teilweise in Form eines Namensmakros wie $(Scope)_$B angegeben werden. Das Namensmakro wird zum Zeitpunkt der Codeerzeugung ausgewertet, wobei $(Scope) durch den Name der Region, insbesondere eines umfassenden Subsystems, und $B durch den Namen des Blocks ersetzt werden. Prinzipiell können weitere Namensmakros bzw. Platzhalter definiert und in dem Namen eines oder mehrerer Bezeichner eingebunden. Es kann auch vorgesehen sein, dass einem Namensmakro jeweils eine Ausweichvorschrift zugeordnet wird, um im Fall von Namenskollisionen eine automatische Auflösung zu ermöglichen. Der Bezeichner kann zweckmäßigerweise auch einen festen Namensbestandteil aufweisen.

Es ist vorteilhaft, wenn vordefinierte Blöcke, welche eine Funktionalität bereitstellen, aus einer Bibliothek in das Blockdiagramm eingefügt werden können, wobei mehrere Blöcke mit der gleichen Funktionalität in dem Blockdiagramm vorhanden sein können. Zweckmäßigerweise wird in dem Fall, dass mehrere Instanzen eines Blocks in dem Blockdiagramm vorhanden sind, entweder für jede Instanz eine unabhängige Region definiert, oder für die Instanzen eine gemeinsame Funktion und für jede Instanz eine Datenstruktur mit den Blockvariablen definiert werden, wobei je nach auszuführendem Block die entsprechende Datenstruktur an die Funktion übergeben wird. Ein Block bzw. ein Subsystem, welches mehrfach in dem Blockdiagramm verwendet wird, kann aus einer Bibliothek oder aus einer referenzierten Datei stammen. Es ist vorteilhaft, wenn bei der mehrfachen Verwendung nicht der vollständige Inhalt des Bibliotheksblocks oder des referenzierten Modells kopiert wird, sondern eine instanzübergreifende Funktion des Blocks mit einer instanzspezifischen Datenstruktur kombiniert wird. Dies ermöglicht es, den erzeugten Quellcode besonders kompakt zu halten.

Bevorzugt weist jede Blockvariable eine Zulässigkeitsmarkierung auf, welche gesetzt oder nicht gesetzt sein kann, und zwei Blockvariablen werden nur dann in einer gemeinsamen Variable implementiert, wenn in beiden Blockvariablen die Zulässigkeitsmarkierung gesetzt ist. Das Setzen einer Zulässigkeitsmarkierung ermöglicht eine direkte Beeinflussung der Optimierung durch den Nutzer. Die Zulässigkeitsmarkierung kann unbedingt gelten oder nur in Verbindung mit der Erfüllung einer zusätzlichen Bedingung eine Optimierung gestatten. Prinzipiell können den Blockvariablen bzw. den Blöcken auch eine unbedingte Zusatzmarkierung sowie eine oder mehrere Prüfmarkierungen zugeordnet werden.

Besonders bevorzugt weist jede Blockvariable mindestens eine Prüfmarkierung auf, welche gesetzt oder nicht gesetzt sein kann, und zwei Blockvariablen werden nur dann in einer gemeinsamen Variable implementiert, wenn in beiden Blockvariablen die Prüfmarkierung gesetzt ist und zusätzlich mindestens eine der Prüfmarkierung zugeordnete Prüfbedingung erfüllt ist. Somit kann automatisch sichergestellt werden, dass die Optimierung in dem vorliegenden Modell sinnvolle Ergebnisse erzeugt.

Zweckmäßigerweise werden eine oder mehrere der folgenden Prüfbedingungen überprüft:
- Ob die Blockvariablen innerhalb des Blocks nicht verändert, sondern nur ausgelesen werden.
- Ob die Lebensdauern verschiedener Instanzen der Blockvariablen disjunkt sind, so dass die zwei Blockvariablen nur zu unterschiedlichen, nicht überlappenden Zeiten gelesen oder geschrieben werden.
- Ob den Blockvariablen in einer Definitionsdatensammlung dieselbe Variablendefinition zugeordnet ist. Eine Variablendefinition kann insbesondere die Angabe eines Grund-Datentyps, des Minimal- und/oder Maximal-Werts und/oder eine Skalierung umfassen.
- Ob die Blockvariablen an einer gleich spezifizierten gerichteten Verbindung angeordnet sind. Eine gerichtete Verbindung zwischen zwei Blöcken zeigt zweckmäßigerweise den Austausch von Signalen an; Signale können einen skalaren Datentyp aufweisen oder aus mehreren skalaren Datentypen zusammengesetzt sein, wie etwa ein Bus.

Hierbei kann es vorgesehen sein, dass einer Prüfmarkierung eine Prüfbedingung zugeordnet ist, oder einer Prüfmarkierung mehrere Prüfbedingungen zugeordnet sind, wobei ein Zusammenfassen von Variablen nur dann erfolgt, wenn alle der Prüfmarkierung zugeordneten Bedingungen erfüllt. Es kann auch mehr als eine Prüfmarkierung geben, wobei jeder einzelnen Prüfmarkierung dann eine oder mehrere Prüfbedingungen zugeordnet sind.

Besonders bevorzugt kann einer Blockvariablen ein oder mehrere Parameter zugeordnet werden, wobei zwei Blockvariablen nur dann in einer gemeinsamen Variable implementiert werden, wenn eine oder mehrere der folgenden Zusatzbedingungen erfüllt ist:
- Den Blockvariablen wurde derselbe Datentyp zugeordnet
- Den Blockeinheiten wurden miteinander verträgliche Maßeinheiten zugeordnet
- Die Namen von Blockvariablen werden mittels Erzeugungsvorschriften bestimmt, wobei nur solche Blockvariablen zusammengefasst werden, deren Namen mit der gleichen Erzeugungsvorschrift bestimmt wurde.

Vorzugsweise wird mindestens eine Blockvariable anhand von gerichteten Verbindungen zwischen Blöcken automatisch erzeugt, wobei für den Fall, dass ein erster Block mit einem zweiten Block und der zweite Block mit einem dritten Block verbunden ist, eine Blockvariable des ersten Blocks für die von dem ersten Block ausgehende Verbindung erzeugt wird und eine Blockvariable des zweiten Blocks für die von dem zweiten Block ausgehende Verbindung erzeugt wird, wobei die zwei Blockvariablen dann als eine gemeinsame Variable in dem Quellcode implementiert werden, wenn der erste Block und der zweite Block in der gleichen Region liegen.

Es ist vorteilhaft, wenn eine Trennungsregion definiert ist, wobei die Blockvariablen von Blöcken, die in der Trennungsregion liegen, immer als getrennte Variable im Quellcode implementiert sind. Insbesondere kann die äußerste Region als Trennungsregion vordefiniert sein, wobei Definitionsblöcke in untergeordneten Hierarchieebenen dann einzelne Regionen definieren, in denen Blockvariablen zusammengefasst werden dürfen.

Die Erfindung betrifft ferner ein Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Einlesen eines Blockdiagramms,
b. Erzeugen eines Quellcodes mit einem Verfahren nach einem der vorhergehenden Ansprüche,
c. Kompilieren des Quellcodes für die Recheneinheit, so dass ein ausführbarer Code erzeugt wird,
d. Übertragen des ausführbaren Code auf das Steuergerät, und
e. Hinterlegen des ausführbaren Codes auf einem nichtflüchtigen Speicher des Steuergeräts und/oder Ausführen des ausführbaren Codes durch die Recheneinheit des Steuergeräts.

Ferner betrifft die Erfindung ein Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein Verfahren gemäß einem der vorhergehenden Ansprüche auszuführen.

Weiterhin betrifft die Erfindung ein Computersystem umfassend eine Mensch-Maschine-Schnittstelle, einen nichtflüchtigen Speicher und einen Prozessor, wobei der Prozessor dazu eingerichtet ist, ein erfindungsgemäßes Verfahren auszuführen.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

Darin zeigt:
- Figur 1: eine bevorzugte Ausführungsform eines Computersystems,
- Figur 2: eine schematische Darstellung der vorzugsweise auf einem Computersystem vorhandenen Softwarekomponenten,
- Figur 3: ein allgemeines Schema des Erzeugens von Quellcode,
- Figur 4: eine schematische Darstellung der Überprüfung des erzeugten Quellcodes anhand des Blockdiagramms,
- Figur 5: eine schematische Darstellung eines beispielgemäßen Blockdiagramms mit mehreren Hierarchieebenen,
- Figur 6: einen schematischen Ablaufplan einer bevorzugten Ausführungsform des erfindungsgemäßen Verfahrens, und
- Figur 7: ein detailliertes Ausführungsbeispiel eines Blockdiagramms.

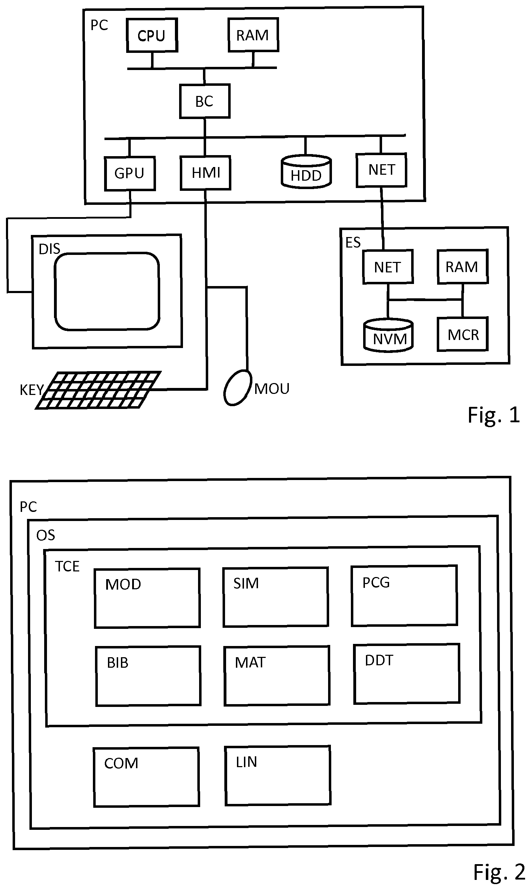

Figur 1 zeigt eine bevorzugte Ausführungsform eines Computersystems PC. Dieses weist einen Prozessor CPU, der insbesondere als Mehrkernprozessor realisiert sein kann, einen Arbeitsspeicher RAM und einen Buscontroller BC auf. Bevorzugt ist das Computersystem PC dazu ausgelegt, von einem Nutzer direkt manuell bedient zu werden, wobei über eine Grafikkarte GPU ein Monitor DIS und über eine Peripherieschnittstelle HMI eine Tastatur KEY und eine Maus MOU angeschlossen sind. Prinzipiell könnte die Mensch-Maschine-Schnittstelle des Computersystems PC auch als Touch-Interface ausgebildet sein. Das Computersystem umfasst weiterhin einen nichtflüchtigen Datenspeicher HDD, der insbesondere als Festplatte und/oder Solid State Disk ausgeführt sein kann, sowie eine Schnittstelle NET, insbesondere eine Netzwerkschnittstelle. Über die Schnittstelle NET kann ein Steuergerät ES angeschlossen sein. Prinzipiell können ein oder mehrere beliebige Schnittstellen, insbesondere drahtgebundene Schnittstellen, an dem Computersystem PC vorhanden und jeweils für die Verbindung mit einem Steuergerät ES einsetzbar sein. Zweckmäßigerweise kann eine Netzwerkschnittstelle nach dem Ethernet-Standard verwendet werden; die Schnittstelle NET kann auch drahtlos ausgeführt sein, wie insbesondere als WLAN-Schnittstelle oder nach einem Standard wie Bluetooth.

Das Steuergerät ES kann als ein Seriensteuergerät oder als Evaluierungsboard für eine Target-Plattform ausgeführt sein. Zweckmäßigerweise umfasst es eine Schnittstelle NET zur Verbindung mit dem Computersystem PC, einen Mikrocontroller MCR mit einer von dem Prozessor des Computersystems abweichenden Architektur, einen Arbeitsspeicher RAM und einen nichtflüchtigen Speicher NVM.

In Figur 2 ist ein Schema der vorzugsweise auf dem Computersystem PC installierten Softwarekomponenten dargestellt. Diese verwenden Mechanismen des Betriebssystems OS, um beispielsweise auf den nichtflüchtigen Speicher HDD zuzugreifen oder über die Netzwerkschnittstelle NET eine Verbindung zu einem externen Rechner aufzubauen.

Eine Technische Rechenumgebung TCE ermöglicht die Erstellung von Modellen und die Erzeugung von Quellcode aus den Modellen. In einer Modellierumgebung MOD können vorzugsweise über eine graphische Benutzerschnittstelle Modelle eines dynamischen Systems erstellt werden. Hierbei kann es sich insbesondere um Blockdiagramme handeln, welche mehrere Blöcke umfassen und das zeitliche Verhalten und/oder interne Zustände eines dynamischen Systems beschreiben. Zumindest einige der Blöcke sind über Signale verbunden, also gerichtete Verbindungen zum Austausch von Daten, welche skalar oder zusammengesetzt sein können. Blöcke können atomar sein, also in einem Schritt eine vordefinierte Funktionalität bereitstellen. Wenn Blockdiagramme hierarchisch sind, kann eine Vielzahl von Blöcken in einer untergeordneten Ebene den Aufbau eines Blocks in einer übergeordneten Ebene beschreiben. Zweckmäßigerweise können atomare Blöcke dann auch eine Vielzahl von Blöcken in einer untergeordneten Ebene umfassen. Zusammengesetzte Blöcke können insbesondere Subsysteme sein; Subsysteme können zusätzliche Eigenschaften aufweisen, wie die Implementierung in einer getrennten Funktion und/oder ein Triggern der Ausführung des Subsystems über ein dediziertes Signal. In Subsystemen können spezielle Blöcke angeordnet sein, um die Eigenschaften des Subsystems weiter zu spezifizieren. Die Rechenumgebung TCE umfasst eine oder mehrere Bibliotheken BIB, aus der Blöcke bzw. Bausteine für den Aufbau eines Modells ausgewählt werden können. In einer Skriptumgebung MAT können Anweisungen interaktiv oder über eine Batchdatei eingegeben werden, um Berechnungen durchzuführen oder das Modell zu modifizieren. Die Rechenumgebung TCE umfasst weiterhin eine Simulationsumgebung SIM, die dazu eingerichtet ist, das Blockdiagramm zu interpretieren bzw. auszuführen, um das zeitliche Verhalten des Systems zu untersuchen. Diese Berechnungen erfolgen vorzugsweise mit Fließkommazahlen hoher Genauigkeit auf einem oder mehreren Kernen des Mikroprozessors CPU des Computersystems.

Aus einem erstellten Modell kann mit Hilfe eines Codegenerators PCG ein Quellcode bevorzugt in einer Programmiersprache wie C erzeugt werden. In einer Definitionsdatensammlung DDT werden zweckmäßigerweise zusätzliche Informationen zu dem Modell, insbesondere zu den Blockvariablen. Zweckmäßigerweise werden den Blockvariablen Wertebereiche und/oder Skalierungen zugeordnet, um eine Berechnung des Modells mit Festkomma-Instruktionen zu unterstützen. Auch gewünschte Eigenschaften des Quellcodes, beispielsweise Konformität zu einem Standard wie MISRA, können in der Definitionsdatensammlung DDT eingestellt bzw. hinterlegt werden. Zweckmäßigerweise wird jede Blockvariable einem vorgegebenen Variablentyp zugeordnet und es werden eine oder mehrere gewünschte Eigenschaften, wie beispielsweise die Zulässigkeit von Optimierungen wie einem Zusammenfassen von Variablen eingestellt. Der Codegenerator PCG wertet vorzugsweise die Einstellungen der Definitionsdatensammlung DDT aus und berücksichtigt diese bei der Erzeugung des Quellcodes. Die Definitionsdatensammlung DDT kann eine Baumstruktur aufweisen bzw. als eine einfache Datei in einem Speicher des Computersystems hinterlegt sein; alternativ kann es vorgesehen sein, die Definitionsdaten in einem dedizierten Datenbanksystem zu hinterlegen. Die Definitionsdatensammlung kann eine Programmschnittstelle und/oder Import-/Export-Funktionen aufweisen.

Das Computersystem PC weist einen Compiler COM und einen Linker LIN auf, die zweckmäßigerweise für die Erzeugung von auf einem Steuergerät ES und/oder dem Computersystem PC ausführbaren Binärdateien eingerichtet sind. Prinzipiell kann eine Vielzahl von Compilern vorhanden sein, insbesondere Cross-Compiler für unterschiedliche Zielplattformen, um Steuergeräte bzw. Evaluationsboards ES mit unterschiedlichen Prozessorarchitekturen zu unterstützen.

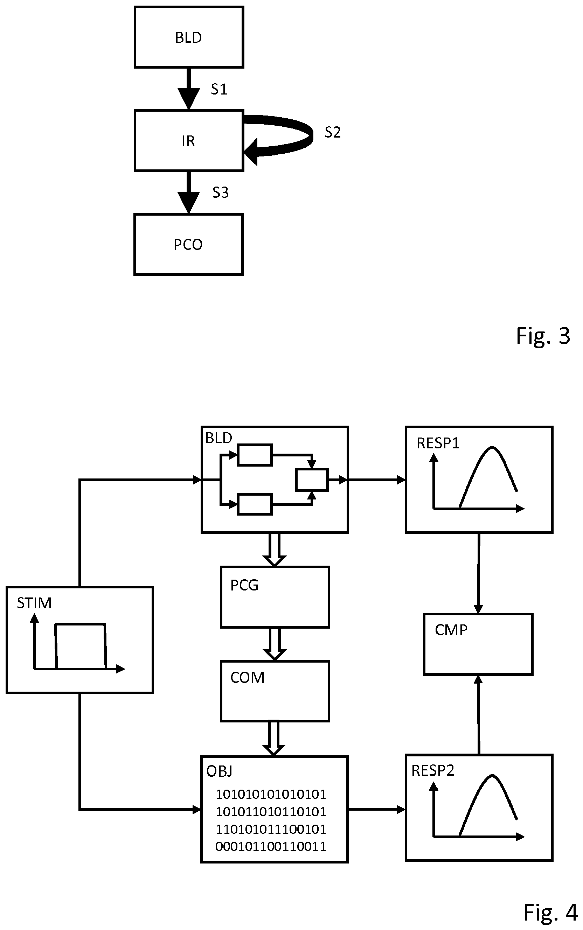

Figur 3 zeigt ein allgemeines Schema des Erzeugens von Quellcode mittels eines Codegenerators. Das Verfahren kann vollständig von einem Prozessor einer bevorzugten Ausführungsform des Computersystems PC ausgeführt werden; es kann aber auch zur Ausführung in einer Client-Server-Umgebung mit einem Bedienrechner und einem oder mehreren über ein Netzwerk verbundenen Servern vorgesehen sein, wobei insbesondere rechenintensive Schritte auf den Servern durchgeführt werden.

In einem ersten Schritt S1, einer Transformation, wird das gewählte Modell aus einem oder mehreren Blöcken des Blockdiagramms BLD in eine Zwischendarstellung IR transformiert, die vorzugsweise einen oder mehrere hierarchische Graphen umfasst. Hierbei kann es sich insbesondere um einen Datenflussgraph, einen Kontrollflussgraph oder eine Baumstruktur handeln. Neben dem Blockdiagramm BLD werden zweckmäßigerweise auch Zusatzinformationen aus einer Definitionsdatensammlung DDT bei der Erzeugung der Zwischendarstellung berücksichtigt bzw. fließen in diese ein. Dies kann auch Situationen umfassen, in denen Elemente basierend auf Informationen in der Definitionsdatensammlung DDT erzeugt werden oder Eigenschaften von Elementen bzw. für die Codeerzeugung relevante Einstellungen, wie beispielsweise der Datentyp einer Variablen, aus der Datendefinitionssammlung DDT extrahiert werden.

In einem zweiten Schritt S2, einer Optimierung, werden die hierarchischen Graphen optimiert, um die Anzahl benötigter Variablen und/oder einen Speicherverbrauch, wie beispielsweise eine Stackbelegung, und/oder die Anzahl von Operationen bzw. Prozessorinstruktionen und/oder die Ausführungszeit des Quellcodes zu verringern. Diese Optimierung kann eine Vielzahl von Zwischenschritten umfassen, in denen weitere Zwischendarstellungen zwischen Modell/Blockdiagramm und Quellcode/Programmtext erzeugt werden. Insbesondere kann es vorgesehen sein, in jedem Zwischenschritt eine Menge von ursprünglichen hierarchischen Graphen in eine andere Menge von geänderten hierarchischen Graphen zu konvertieren, wobei eine oder mehrere Optimierungsregeln angewandt werden. Verschiedene Strategien wie "Constant folding" oder eine Eliminierung von "Dead Code" können während der Optimierung angewandt werden. Es kann auch vorgesehen sein, einzelne Optimierungen bereits im Rahmen der Transformation von Schritt S1 anzuwenden, insbesondere wenn diese auf einer Blockdiagrammdarstellung einfacher durchgeführt werden können. Im Rahmen der Erfindung ist es prinzipiell sowohl möglich, dass mehrere in Schritt S1 erzeugte Variablen in Schritt S2 zusammengefasst werden, als auch dass in Schritt S1 mehrere Variable des Blockdiagramms derart zusammengefasst werden, dass bereits die erste Zwischendarstellung nur noch eine Variable enthält.

In einem dritten Schritt S3, einer Übersetzung, werden die optimierte Zwischendarstellung IR bzw. die optimierten hierarchischen Graphen, welche aus den gesamten durchgeführten Zwischenschritten resultieren, in Quellcode PCO einer textuellen Programmiersprache, wie insbesondere C-Code, übersetzt. Auch in diesem Schritt kann eine weitere Optimierung erfolgen, insbesondere dergestalt, dass die erzeugten Anweisungen einer Untermenge der prinzipiell von der Sprache umfassten Anweisungen darstellen und/oder die erzeugten Kontrollstrukturen eine Untermenge der prinzipiell von der Sprache umfassten Kontrollstrukturen darstellen. Dies ermöglicht es, genau definierte Regeln zu erfüllen. Alternativ oder ergänzend kann es vorgesehen sein, Zusatzinformationen, wie z.B. einen Bezug zwischen Programmzeile und Block des Blockdiagramms BLD, zu erzeugen und insbesondere in Form von Kommentaren in den Quellcode einzubinden, um die Lesbarkeit des Quellcodes PCO zu verbessern und/oder ein Debugging zu vereinfachen.

Während oder nach der Codegenerierung können Informationen über das aktuelle Blockdiagramm oder Ergebnisse der Codegenerierung, wie beispielsweise Warnungen, in der Definitionsdatensammlung gespeichert werden. Diese Informationen können beispielsweise dazu genutzt werden, eine Kompilierung des erzeugten Quellcodes zu beeinflussen oder Metainformationen für andere Werkzeuge bereitzustellen, wie beispielsweise Kalibrierungsinformationen im ASAP2-Format oder Informationen zur Erzeugung einer Zwischenschicht nach dem AUTOSAR-Standard. In alternativen Ausführungsformen der Erfindung kann es vorgesehen, aus dem Blockdiagramm Code in einer Hardwarebeschreibungssprache oder eine Konfiguration eines programmierbaren Hardwarebausteins zu generieren.

Figur 4 zeigt eine schematische Darstellung der Überprüfung des erzeugten Quellcodes anhand des Blockdiagramms.

In dem abgebildeten Beispiel ist ein Blockdiagramm BLD bzw. ein Subsystem bestehend aus drei Blöcken schematisch dargestellt, welches einen Eingangs-Port zum Empfangen eines Eingangssignals und einen Ausgangs-Port zum Senden eines Ausgangssignals aufweist. Das Blockdiagramm kann zweckmäßigerweise ein vorbestimmtes oder gewünschtes Verhalten eines Kontrollprogramms beschreiben. Wird das Blockdiagramm in der hier nicht gezeigten Simulationsumgebung ausgeführt, so wird das Verhalten für aufeinanderfolgende Zeitschritte berechnet; insbesondere kann das Blockdiagramm BLD hierbei direkt interpretiert werden. Aus der Spezifikation bzw. der vorgesehenen Anwendung wurden im Vorfeld einige Testfälle ermittelt, die insbesondere Stimuli STIM als Eingangssignale für das Kontrollprogramm umfassen, wobei den Stimuli ein entsprechendes Ausgangssignal RESP zugeordnet ist.

Ein Stimulus STIM ist in dem gezeigten Beispiel als Diagramm dargestellt, welches ein bestimmtes zeitliches Verhalten des Eingangssignals angibt. Wenn das Kontrollprogramm bzw. das Blockdiagramm BLD in der Simulationsumgebung des Computersystems ausgeführt wird, so wird für eine Vielzahl von Zeitschritten ein momentaner Wert des Stimulus STIM an den Eingangs-Port des Blockdiagramms BLD angelegt und die den Blöcken entsprechenden Operationen berechnet, um einen inneren Zustand und/oder ein Ausgangssignal des Kontrollprogramms zu ermitteln. Durch das Aufzeichnen des Ausgangssignals während der Ausführung des Blockdiagramms kann eine Sollantwort RESP1 in einer Model-in-the-Loop-Simulation ermittelt werden. Da alle arithmetischen Operationen in einer hohen Genauigkeit berechnet werden, beispielsweise indem Variablen immer den Datentyp Double aufweisen und somit Floating-Point-Berechnungen erfolgen, kann zum einen das korrekte Verhalten des Modells verifiziert werden und zum anderen ist das Simulationsergebnis hinreichend genau, um das gespeicherte Ausgangssignal bzw. die Sollantwort RESP1 als Referenzdaten zu verwenden.

Nachdem also die Korrektheit des Modells bestätigt wurde, erzeugt der Codegenerator PCG Quellcode aus den dem Kontrollprogramm entsprechenden Blöcken des Blockdiagramms. Der erzeugte Quellcode wird anschließend mit einem Compiler COM zu Objektcode OBJ kompiliert, der zweckmäßigerweise Instruktionen für den Prozessor des Zielsystems enthält. Vorzugsweise wird der Objektcode von einem Linker zu einer ausführbaren Datei in dem Betriebssystem des Zielsystems zusammengefasst. Während der Codeerzeugung können Einstellungen bzgl. einer Umwandlung der Modelloperationen in Festkommadarstellung, die also auch eine entsprechende Skalierung umfassen, bzw. allgemein Transformationen zur Verringerung des Rechenaufwands angewandt werden, um eine Echtzeitausführung auch auf leistungsschwächerer Hardware wie einem Mikrocontroller eines Embedded-Systems ES zu ermöglichen.

Um sicherzustellen, dass die optimierte Version des Kontrollprogramms bzw. der generierte Quellcode ein dem Blockdiagramm entsprechendes Verhalten aufweist, erfolgt zweckmäßigerweise eine Software-in-the-Loop-Simulation, bei der das Zielsystem dem Computersystem PC entspricht, oder eine Processor-in-the-Loop-Simulation, bei der das Zielsystem ein Embedded-System ist. Hierbei wird der ausführbaren Datei mit dem Objektcode OBJ während der vorgegebenen Ausführungsdauer der Stimulus STIM zugeführt und das aus den Berechnungen resultierende Ausgangssignal des generierten Quellcodes aufgezeichnet, um die Istantwort RESP2 zu erhalten.

Die Sollantwort RESP1 der Model-in-the-Loop-Simulation kann auf dem Computersystem simultan zu der Ist-Antwort RESP2 des generierten Codes dargestellt werden, um dem Nutzer einen visuellen Vergleich zu ermöglichen. Alternativ oder ergänzend kann auch ein Vergleich von Sollantwort RESP1 und Istantwort RESP2 in einem Vergleichsprogramm CMP berechnet werden. Dies ermöglicht beispielsweise die Bestimmung eines Abweichungsmaßes und/oder das Überprüfen einer oder mehrerer Testbedingungen, beispielsweise das Berechnen einer punktweisen Differenz zwischen Istantwort und Sollantwort und den Vergleich mit einem Schwellwert bzw. einer maximal zulässigen Abweichung.

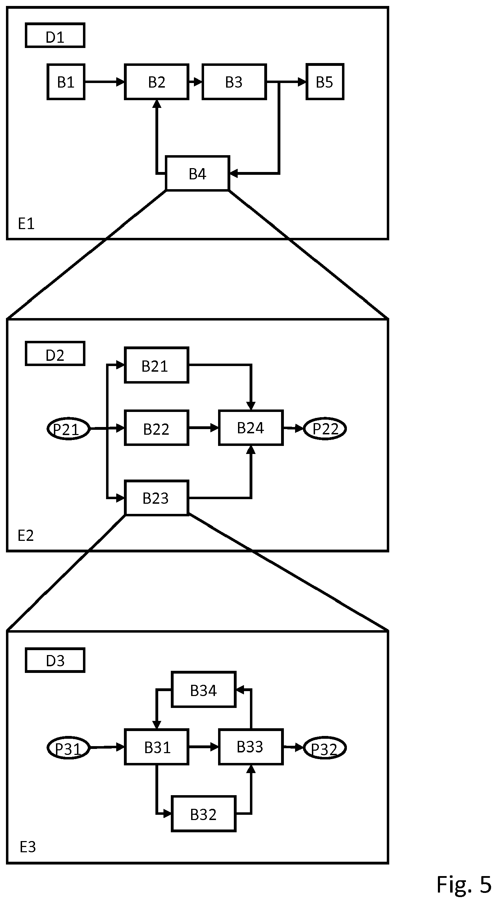

In Figur 5 ist eine schematische Abbildung eines beispielgemäßen Blockdiagramms mit mehreren Hierarchieebenen dargestellt, wobei Blöcke einer Hierarchieebene in einer rechteckigen Umrandung dargestellt sind.

Das gezeigte Blockdiagramm umfasst in der ersten (obersten) Hierarchieebene E1 eine Vielzahl von Blöcken Bi, i=1..5, welche über Signale miteinander verbunden sind, wobei die Richtung der Verbindung den Signalfluss angibt. Weiterhin ist ein Definitionsblock D1 dargestellt, welcher eine erste Region definiert, so dass die Blöcke Bi, i=1..5 in dieser ersten Region liegen. Die Blöcke B1, B2, B3 und B5 können atomar bzw. einfach sein oder eine nicht dargestellte Unterstruktur aufweisen. Block B4 ist ein zusammengesetzter Block, dessen Funktionalität durch Blöcke in einer zweiten (untergeordneten) Hierarchieebene E2 definiert ist.

Der gezeigte Ausschnitt einer zweiten Hierarchieebene E2 umfasst eine Vielzahl von Blöcken B2j, j=1..4, einen Definitionsblock D2 und zwei Ports für den Austausch von Signalen mit der übergeordneten bzw. obersten Hierarchieebene, einen Eingangs-Port P21 und einen Ausgangs-Port P22. Die Blöcke B21, B22 und B24 können atomar bzw. einfach sein oder eine nicht dargestellte Unterstruktur aufweisen. Block B23 ist ein zusammengesetzter Block, dessen Funktionalität durch Blöcke in einer dritten (tiefsten) Hierarchieebene definiert ist.

Der gezeigte Ausschnitt einer dritten Hierarchieebene E3 umfasst eine Vielzahl von Blöcken B3k, k=1..4, einen Definitionsblock D3 und zwei Ports für den Austausch von Signalen mit der übergeordneten bzw. zweiten Hierarchieebene, einen Eingangs-Port P31 und einen Ausgangs-Port P32. Die Blöcke B31, B32, B33 und B34 können atomar bzw. einfach sein oder eine nicht dargestellte Unterstruktur aufweisen. Prinzipiell können Blockdiagramme eine beliebige Anzahl von Hierarchieebenen aufweisen; der besseren Übersicht halber wurden hier keine weiteren Hierarchieebenen dargestellt.

Prinzipiell können verschiedene Blöcke als Definitionsblöcke eingesetzt werden; zweckmäßigerweise sollten zusammengesetzte Blöcke, welche von anderen Modellteilen aufgerufen werden können und eine zusammenhängende Funktionalität bzw. Code-Einheit umfassen, eine eigenständige Region bilden.

Hierbei kann es sich vorzugsweise um Funktionen, insbesondere auf der obersten Ebene des Blockdiagramms handeln. Wenn das Blockdiagramm zur Modellierung von Steuergerätecode nach dem AUTOSAR-Standard verwendet wird, kann zweckmäßigerweise ein Runnable eine eigenständige Region bilden. Hierbei kann der die Region umfassende Block oder vorzugsweise ein in der Region angeordneter Block als Definitionsblock dienen. Es kann vorgesehen sein, dass dedizierte Blöcke für die Definition einer Region verwendet werden, also beispielsweise ein Scope-Block vordefiniert wird. Gemäß einer alternativen bevorzugten Ausführungsform der Erfindung werden Blöcke, welche die Eigenschaften der Funktion bzw. des Runnables spezifizieren, gleichzeitig als Definitionsblock definiert.

Vorzugsweise ist es vorgesehen, dass eine definierte Region alle hierarchisch untergeordneten Blöcke umfasst. Wenn also Definitionsblock D1 eine erste Region definiert, so liegen zweckmäßigerweise neben den Blöcken Bi, i=1..5 auch die Blöcke B2j, j=1..4 und B3k, k=1..4 in dieser ersten Region. Hinsichtlich Port-Blöcken kann es bevorzugt ebenfalls vorgesehen sein, dass diese Teil der umfassenden Region sind.

Ergänzend kann es auch vorgesehen sein, dass zwischen ausgezeichneten Definitionsblöcken, beispielsweise der einem Runnable zugeordnete Definitionsblock, und normalen Definitionsblöcken unterschieden wird. Wenn beispielsweise D2 ein ausgezeichneter Definitionsblock wäre, so würde die von D1 definierte erste Region nur die Blöcke Bi, i=2..5 umfassen, wohingegen die von D2 definierte zweite Region sowohl die Blöcke B2j, j=1..4 als auch die Blöcke B3k, k=1..4 umfasst. Es kann vorgesehen sein, dass es nur einen Typ von ausgezeichneten Definitionsblöcken gibt. Zweckmäßigerweise definieren normale Definitionsblöcke nur dann eine Region, wenn kein ausgezeichneter Definitionsblock in einer übergeordneten Ebene vorhanden ist.

Weiterhin kann vorgesehen sein, dass normale Definitionsblöcke eine neue Region aus einer mit einem normalen Definitionsblock definierten übergeordneten Region "ausscheiden" können. Wenn D1, D2 und D3 normale Definitionsblöcke sind, so kann die von D1 definierte erste Region die Blöcke B1, B2, B3, B5 umfassen, während Block B4 die durch Definitionsblock D2 definierte zweite Region bildet. Diese zweite Region umfasst dann die Blöcke B21, B22 und B24, während Block B23 die durch Definitionsblock D3 definierte dritte Region bildet. Die Blöcke B3k, k=1..4 liegen dann in der dritten Region.

Bezugnehmend auf das in Figur 5 dargestellte Diagramm sollen im Folgenden kurz einige Ausführungsbeispiele von Erzeugungsvorschriften erläutert werden. Hierbei soll D1 ein ausgezeichneter Definitionsblock sein, insbesondere ein Runnable, D2 soll ein regulärer Definitionsblock sein, der insbesondere eine Subfunktion definiert, und D3 soll ein regulärer Definitionsblock sein, insbesondere einen Bibliotheksblock ohne Definition einer eigenen Funktion definieren. Der Einfachheit halber wird vorliegend die von einem Definitionsblock aufgespannte Region mit demselben Namen wie der Definitionsblock bezeichnet.

Wenn den Blockvariablen von B2, B3, B21, B24, B31 und B33 jeweils die Erzeugungsvorschrift bzw. das Namensmakro "$(Scope)_X" zugeordnet ist, so entstehen bei einer Codegenerierung für die Blöcke B2, B3 Variablen mit dem Bezeichner "D1_X", für die Blöcke B21, B24 Variablen mit dem Bezeichner "D2_X" und für die Blöcke B31, B33 Variablen mit dem Bezeichner "D3_X". Unter der Voraussetzung, dass eventuelle Zusatzbedingungen erfüllt sind, können also beispielsweise die Variablen von Block B2 mit denen von Block B3 zusammengefasst werden.

Es kann auch vorgesehen sein, dass eine Erzeugungsvorschrift zwischen ausgezeichneten Regionen bzw. ausgezeichneten Definitionsblöcken und regulären Regionen bzw. Definitionsblöcken unterscheidet. Ist den Blockvariablen der Blöcke B1, B22 und B32 jeweils die Erzeugungsvorschrift bzw. das Namensmakro "$(Scope:ParentFunction)_Y" zugeordnet, wobei also die umgebende Funktion berücksichtigt wird, so erhalten bei einer Codegenerierung aus dem Block B1 erzeugte Variablen den Bezeichner "D1_Y" und aus den Blöcken B22 und B32 erzeugte Variablen jeweils den Bezeichner "D2_Y". Wenn den Blöcken B5 und B34 bzw. deren Blockvariablen jeweils die Erzeugungsvorschrift "$(Scope:Runnable)_Z" zugeordnet ist, wobei also das umgebende Runnable berücksichtigt wird, so werden bei einer Codegenerierung sowohl für B5 als auch für B34 Variablen mit dem Bezeichner "D1_Z" erzeugt. Sofern also eventuelle Zusatzbedingungen erfüllt sind, können also beispielsweise die Variablen von B5 und B34 zusammengefasst werden.

Besonders vorteilhaft ist es, wenn bei dem Zusammenfassen von Variablen nicht nur die Bezeichner selbst verglichen werden, sondern auch die jeweiligen Erzeugungsvorschriften berücksichtigt werden. Wenn gemäß dieser optionalen Zusatzbedingung dann festgestellt wird, dass der Bezeichner einer ersten Variable anhand der Erzeugungsvorschrift "D1_X" (also einem festen Wert) erzeugt wurde, und der Bezeichner einer zweiten Variable anhand der Erzeugungsvorschrift "$(Scope:Runnable)_X" erzeugt wurde, so ist es zweckmäßig, dass die Variablen nicht zusammengefasst werden, sondern eine Warnung oder Fehlermeldung erfolgt. Dies verringert die Gefahr von fehlerhaften Programmen aufgrund falscher Bezugnahmen.

Indem die Erzeugungsvorschriften bereits einen Bezug auf die den entsprechenden Block umfassende Region enthalten, wird also eine verbesserte Sicherheit gegenüber fehlerhaften Programmen erreicht. Ganz besonders vorteilhaft ist es, wenn eine Erzeugungsvorschrift nur Bezüge auf eine den zugeordneten Block umfassende Region aufweisen darf. Dies erhöht die Zuverlässigkeit der erzeugten Programme weiter.

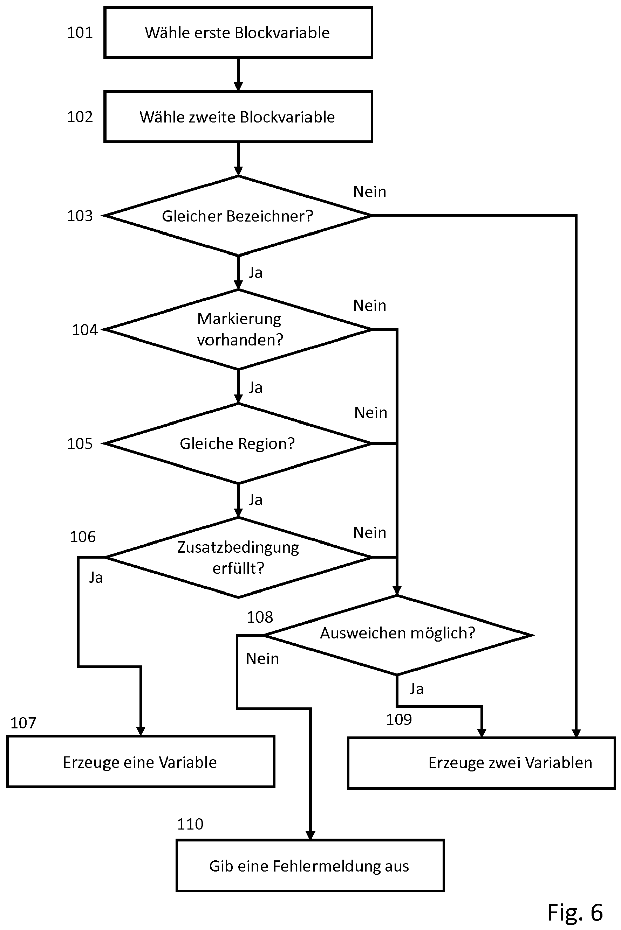

In Figur 6 ist ein schematischer Ablaufplan einer bevorzugten Ausführungsform des erfindungsgemäßen Verfahrens dargestellt, wobei hier nur das Vorgehen für eine erste und eine zweite Blockvariable gezeigt ist. Gemäß einer besonders vorteilhaften Ausführungsform der Erfindung wird zunächst eine Liste der in dem Blockdiagramm vorhandenen Blockvariablen erstellt, wobei konsekutiv alle Blockvariablen überprüft werden. Vorzugsweise werden alle möglichen Paare von Blockvariablen überprüft.

Für die Prüfung eines möglichen Zusammenfassens werden zwei Blockvariablen gewählt, also in Schritt 101 eine erste Blockvariable und in Schritt 102 eine zweite Blockvariable.

In Schritt 103 wird überprüft, ob die erste und die zweite Blockvariable den gleichen Bezeichner aufweisen. Dies kann das Auswerten von Erzeugungsvorschriften umfassen. Wenn die Blockvariablen verschiedene Bezeichner aufweisen, erfolgt ein Übergang auf Schritt 109.

Wenn die Blockvariablen gleich benannt sind, wird in Schritt 104 überprüft, ob in beiden Variablen eine Zulässigkeitsmarkierung gesetzt ist. Falls lediglich in einer der Blockvariablen die Markierung gesetzt ist, wird zweckmäßigerweise für die Blockvariable ohne Zulässigkeitsmarkierung eine gesonderte Variable im Quellcode erstellt und statt dieser eine neue Blockvariable für den Vergleich ausgewählt. Sofern für eine oder beide Blockvariablen keine Zulässigkeitsmarkierung vorliegt, erfolgt ein Übergang auf Schritt 108.

Anschließend wird in Schritt 105 überprüft, ob die Blockvariablen in der gleichen Region angeordnet sind und somit ein hinreichender lokaler Bezug besteht. Ist dies nicht der Fall, so erfolgt ein Übergang auf Schritt 108.

In Schritt 106 wird überprüft, ob die Blockvariablen eine Zusatzbedingung erfüllen. Beispielsweise kann erforderlich sein, dass die erste und die zweite Blockvariable in der Definitionsdatensammlung eine oder mehrere übereinstimmende Eigenschaften aufweisen, wie insbesondere eine Skalierung. Wenn die Zusatzbedingung nicht erfüllt ist, so erfolgt ein Übergang auf Schritt 108.

Wenn alle bisher überprüften Bedingungen erfüllt sind, werden die erste und die zweite Blockvariable in Schritt 107 zu einer Variable im Quellcode zusammengefasst, es wird also eine Variable erzeugt.

Wenn die beiden Blockvariablen den gleichen Bezeichner aufweisen, aber mindestens eine der anderen Bedingungen nicht erfüllt ist, so wird in Schritt 108 überprüft ob ein Ausweichen möglich ist, d.h. für eine der Blockvariablen im Programmcode eine anders benannte Variable erzeugt werden kann. Es ist vorteilhaft, wenn in einer Erzeugungsvorschrift auch eine mögliche Umbenennung bzw. eine Ausweichregel definiert ist. Sollte im konkreten Fall kein Ausweichen möglich sein, so wird in Schritt 110 eine Fehlermeldung an den Nutzer ausgegeben. Ergänzend kann optional vorgesehen sein, die Codeerzeugung abzubrechen, damit zunächst nötige Anpassungen am Modell vorgenommen werden.

Ist ein Ausweichen möglich oder war mindestens eine der überprüften Bedingungen 104, 105 und 106 nicht erfüllt, dann findet in Schritt 109 eine Erzeugung von zwei getrennten Variablen statt.

Nachdem (in Schritt 108) eine oder (in Schritt 109) zwei Variablen im Quellcode erzeugt wurden, wird das Verfahren zweckmäßigerweise mit den weiteren zu überprüfenden Blockvariablen durchgeführt.

Prinzipiell kann die Reihenfolge der überprüften Bedingungen gewechselt werden, und es kann auch vorgesehen sein, mehrere Bedingungen in einem Schritt zu überprüfen, wenn beispielsweise die Bezeichner der Blockvariablen auch Informationen über die Region enthalten. In andere Ausführungsformen der Erfindung kann es auch vorgesehen sein, dass zunächst eine Liste mit allen Blockvariablen in einer vorgegebenen Region erstellt wird, wobei die weiteren Bedingungen dann nur für die in der Liste enthaltenen Variablen überprüft werden. Ferner kann es vorgesehen sein, dass die Optimierung in mehreren Schritten erfolgt, also zunächst eine Vielzahl von Variablen im Quelltext erstellt und diese dann anhand eines Vergleichs der zugeordneten Blockvariablen zusammengefasst werden.

In alternativen Ausführungsformen der Erfindung kann es auch vorgesehen sein, verschiedene Zulässigkeits- bzw. Prüfmarkierungen mit verschiedenen Zusatzbedingungen zu verknüpfen. Beispielsweise kann ein Zusammenfassen von Variablen dann gestattet sein, wenn es sich um Blockparameter handelt, welche nur gelesen werden, die also insbesondere eine Kalibriergröße darstellen können. In einem anderen Beispiel kann ein Zusammenfassen dann gestattet sein, wenn die verschiedenen Blockvariablen disjunkte Lebensdauern aufweisen, so dass Seiteneffekte durch überlappende Schreib-/Lesevorgänge verschiedener Blöcke ausgeschlossen werden können.

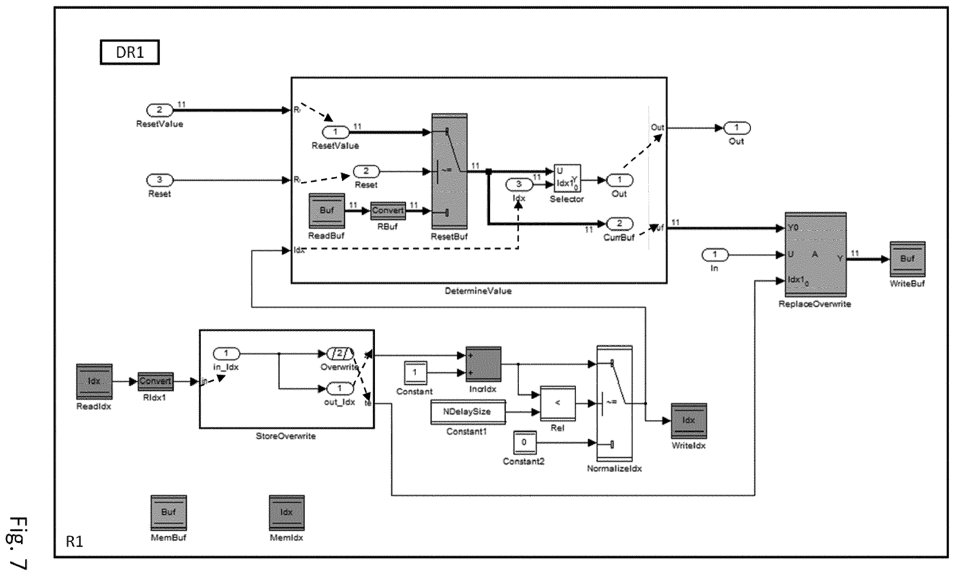

Figur 7 zeigt ein detailliertes Ausführungsbeispiel eines Blockdiagramms, welches die Funktionalität eines Puffers mit Reset-Möglichkeit bereitstellt. Dies dient insbesondere dazu, einen Block mit der entsprechenden Funktionalität in einem nicht dargestellten übergeordneten Modell zu implementieren, wobei das Blockdiagramm ein- oder mehrfach referenziert werden kann, also ggfs. einen komplexen Bibliotheksblock darstellt.

In diesem Beispiel sind die beiden Blöcke DetermineValue und StoreOverwrite atomare Subsysteme, welche in einer untergeordneten Hierarchieebene implementiert sind, aber in einem Rechenschritt ausgeführt werden. Der besseren Übersichtlichkeit halber ist hier die jeweilige Implementierung in dem Block selber dargestellt, wobei über gestrichelte Pfeile die Verbindung zwischen dem mit dem jeweiligen Block verbundenen Signal und dem zugeordneten Eingangs- oder Ausgangs-Port der untergeordneten Hierarchieebene angegeben sind. Ports sind mit abgerundeten Ecken dargestellt, wobei anhand der Signalrichtung erkennbar ist, ob es sich um einen Eingangs-Port, der ein Signal empfängt, oder einen Ausgangs-Port handelt. In dem beispielgemäßen Blockdiagramm ist ein Definitionsblock DR1 angeordnet, der eine Region R1 definiert, welche alle gezeigten Blöcke umfasst.

Das gezeigte Blockdiagramm hat den Eingangs-Port In, der ein skalares Signal empfängt, den Eingangs-Port ResetValue, der ein Vektor-Signal mit einer Breite von 11 empfängt, und den Eingangs-Port Reset, der ein skalares bzw. boolesches Signal empfängt. Ferner weist es einen Ausgangs-Port Out auf, der ein skalares Signal sendet. Zwei unverbundene Blöcke MemBuf und MemIdx definieren Speicherblöcke (DataStoreMemory), auf die mittels spezieller Schreib- bzw. Leseblöcke zugegriffen werden kann. Die Speicherblöcke können zwischen mehreren Aufrufen der in dem Blockdiagramm implementierten Funktionalität ihren Wert beibehalten und stellen somit Zustände dar. Der Speicherblock MemBuf wird mit dem Block ReadBuf gelesen und mit dem Block WriteBuf beschrieben. Entsprechend wird der Speicherblock MemIdx mit dem Block ReadIdx gelesen und mit dem Block WriteIdx beschrieben.

Ein von außen angelegtes Vektor-Signal ResetValue wird dem Umschalteingang des Blocks ResetBuf in dem atomaren Subsystem Determine Value zugeführt; dieser empfängt weiterhin das von außen angelegte Signal Reset und den aktuellen Wert des Speicherblocks MemBuf. Dieser wird über den Block ReadBuf ausgelesen und mittels des Blocks RBuf (Convert) geeignet konvertiert. Der Block ResetBuf liefert in Abhängigkeit von dem anliegenden Umschaltwert als Ausgangssignal entweder den aktuellen Wert des Speicherblocks oder den Wert des Signals ResetValue. Mittels des Selektorblocks Selector kann der skalare Wert mit dem Index Idx aus dem Bus-Signal extrahiert und über den Ausgangs-Port Out ausgegeben werden. Das gesamte Vektor-Signal wird daneben an den Ausgangs-Port CurBuf übergeben.

Der aktuell im Speicherblock MemIdx hinterlegte Wert wird mittels des Blocks ReadIdx ausgelesen, durch den Block RIdx1 (Convert) geeignet konvertiert und dann über den Eingangs-Port in_Idx dem atomaren Subsystem StoreOverwrite zugeführt. Dieses weist zwei Ausgangs-Ports Overwrite und out_Idx auf, welche jeweils denselben Wert ausgeben.

Der Ausgangs-Port out_Idx ist mit einem ersten Eingang des Summenblock IncrIdx verbunden, dessem zweiten Eingang über einen Konstanten-Block Constant der feste Wert 1 zugeführt wird. Das Ausgangssignal von IncrIdx wird einem Eingang des Blocks Normalize_Idx und einem ersten Eingang von Vergleichsblock Rel zugeführt. An den zweiten Eingang des Vergleichsblocks Rel ist über Konstantenblock Constant1 der Wert NDelaySize angelegt, so dass Vergleichsblock Rel in Abhängigkeit davon, ob das Ausgangssignal von IncrIdx kleiner als NDelaySize ist, den Wert 1 oder 0 ausgibt. Der Ausgang von Vergleichsblock Rel ist mit einem Umschalteingang des Blocks NormalizeIdx verbunden. Über einen Konstantenblock Constant2 wird dem Block NormalizeIdx weiterhin der konstante Wert 0 zugeführt. Somit liegt am Ausgang von NormalizeIdx das Ausgangssignal von IncrIdx an, solange dieses kleiner als NDelaysize ist; andernfalls wird der Ausgangswert von NormalizeIdx zu 0. Der Ausgang des Blocks NormalizeIdx ist mit dem Block WriteIdx zum Beschreiben des Speicherblocks MemIdx sowie dem Eingangs-Port Idx des atomaren Subsystems DetermineValue verbunden.

Der Ausgangs-Port Overwrite ist mit einem Index-Eingang des Zuweisungsblocks ReplaceOverwrite verbunden. Ein Werte-Eingang von ReplaceOverwrite empfängt über einen Eingangs-Port In einen von außen angelegten skalaren Wert. Weiterhin ist ein Vektor-Eingang des Zuweisungsblocks ReplaceOverwrite mit dem Ausgangs-Port CurrBuf des atomaren Subsystems DetermineValue verbunden. Der Ausgang des Zuweisungsblocks, an dem ein Vektor-Signal anliegt, ist mit dem Block WriteBuf zum Beschreiben des Speicherblocks MemBuf verbunden. Somit kann Zuweiungsblock ReplaceOverwrite den aktuellen Wert des an der durch Overwrite gegebenen Position im Bus angeordneten skalaren Teilsignals ändern.

Aus dem in Figur 7 dargestellten Blockdiagramm kann der Quellcode von Listing 1 erzeugt werden (hier in der Sprache C).

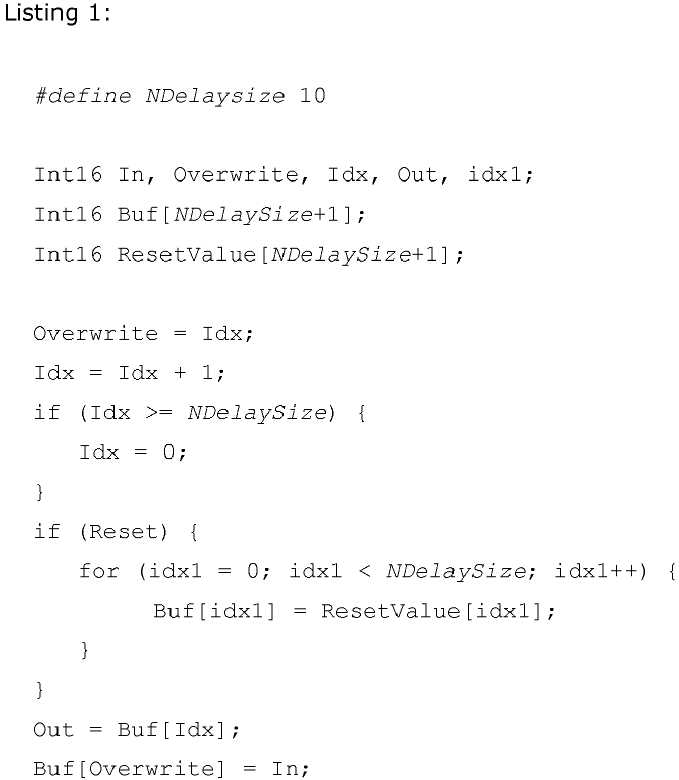

Das prinzipielle Vorgehen bei der Erzeugung des Quellcodes wurde oben in Zusammenhang mit Figur 3 beschrieben. Vorliegend wurden zum einen die Blockvariablen der Blöcke MemBuf, ReadBuf, WriteBuf, RBuf und ResetBuf in eine Array-Variable Buf[] zusammengefasst. Zum anderen wurden die Blockvariablen der Blöcke MemIdx, ReadIdx, WriteIdx, RIdx1 und IncrIdx in eine skalare Variable Idx zusammengefasst.

Wenn die im Blockdiagramm von Figur 7 definierte Funktionalität mehrfach verwendet werden soll, so ist es zweckmäßig, die Daten in einer Struktur zu hinterlegen, welche über einen Zeiger referenziert wird. Dies ermöglicht eine beliebig häufige Verwendung der Anweisungen (Function Reuse), wobei nur die Daten instanzspezifisch, also mehrfach im Speicher vorhanden sein müssen. Der entsprechende Quellcode ist in Listing 2 angegeben.

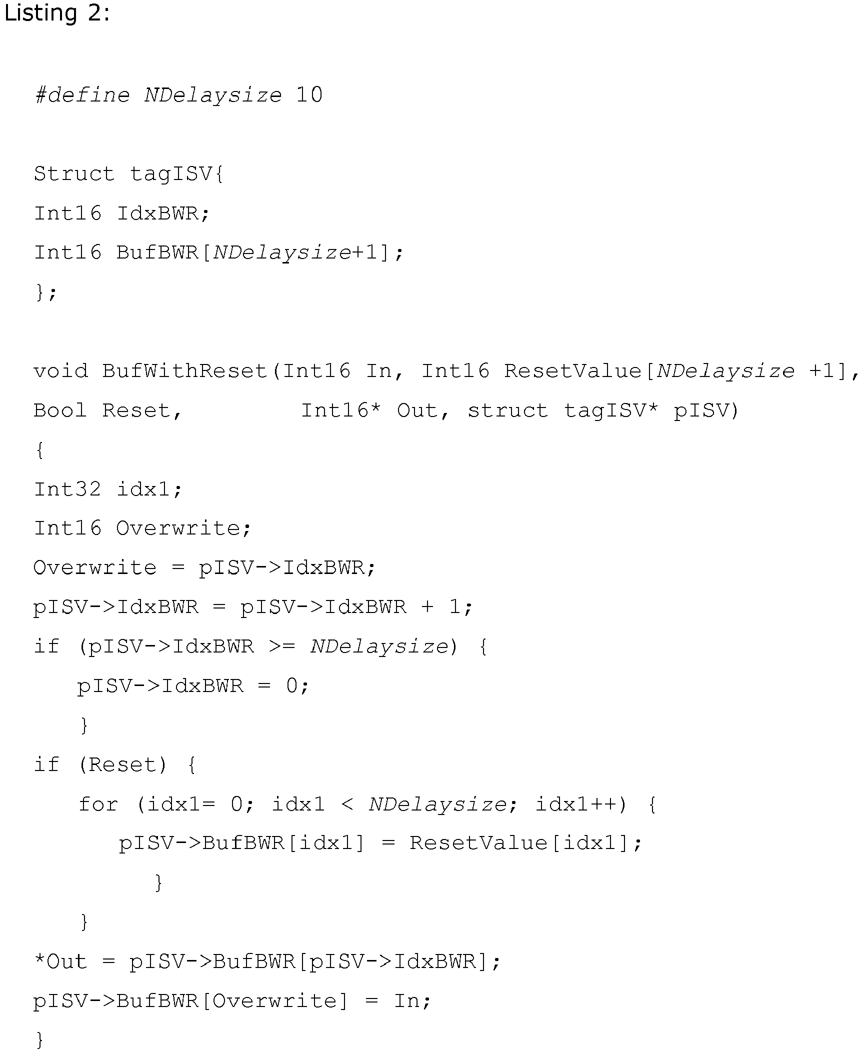

Auch hier wurden die Blockvariablen der Blöcke MemBuf, ReadBuf, WriteBuf, RBuf und ResetBuf in eine Array-Variable BufBWR[] und die Blockvariablen der Blöcke MemIdx, ReadIdx, WriteIdx, RIdx1 und IncrIdx in eine skalare Variable IdxBWR zusammengefasst. Die instanzspezifischen Variablen sind in einer Struktur definiert, welche über einen Zeiger adressiert werden kann, um eine bequeme Wiederverwendung der Funktion zu ermöglichen.

Im Fall von mehrfach verwendeten Bibliotheksblöcken ermöglicht das erfindungsgemäße Verfahren eine besonders große Optimierung.

## Patentansprüche

1. Verfahren zum Erzeugen von Quellcode aus einem oder mehreren Blöcken eines Blockdiagramms, welches ein Modell eines dynamischen Systems mit mindestens einer Signalverbindung zwischen zwei Blöcken umfasst, wobei das Blockdiagramm ausgeführt werden kann, um das dynamische System zu simulieren, wobei in dem Blockdiagramm mindestens eine Region definiert ist, in der ein oder mehrere Blöcke liegen, wobei das Blockdiagramm einen ersten Block und einen zweiten Block umfasst, wobei der erste Block eine erste Blockvariable und der zweite Block eine zweite Blockvariable aufweist, wobei jede Blockvariable des Blockdiagramms einen Bezeichner aufweist, wobei der Bezeichner der ersten Blockvariable mit dem Bezeichner der zweiten Blockvariable verglichen wird, wobei überprüft wird, ob der erste Block und der zweite Block in der gleichen Region liegen, und wobei die erste Blockvariable und die zweite Blockvariable im Quellcode als eine einzige Variable implementiert werden, wenn die Bezeichner übereinstimmen und die Blöcke in einer Region liegen, und wobei die erste Blockvariable und die zweite Blockvariable im Quellcode als zwei getrennte Variablen implementiert werden, wenn die Bezeichner verschieden sind und/oder die Blöcke nicht in der gleichen Region liegen.

2. Verfahren nach Anspruch 1, **dadurch gekennzeichnet, dass** Blockdiagramme hierarchisch definiert sind, wobei ein Block in einer höheren Ebene mehrere Blöcke einer untergeordneten Ebene umfassen kann, wobei Blöcke einer untergeordneten Ebene einem Block einer höheren Ebene zugeordnet sind, und dass das Blockdiagramm einen oder mehrere Definitionsblöcke umfasst, wobei eine Region anhand von einem Definitionsblock derart definiert ist, dass der den Definitionsblock umfassende Block der nächsthöheren Ebene und alle diesem umfassenden Block zugeordneten Blöcke in der Region liegen.

3. Verfahren nach Anspruch 2, **dadurch gekennzeichnet, dass** das Blockdiagramm mindestens zwei Definitionsblöcke umfasst, welche von einem gemeinsamen Block einer höheren Ebene umfasst sind, wobei ein erster Definitionsblock in einer ersten Ebene und ein zweiter Definitionsblock in einer gegenüber der ersten Ebene untergeordneten zweite Ebene angeordnet ist, wobei der erste Block eine erste Region definiert und wobei der zweite Block eine zweite Region derart definiert, dass der den zweiten Definitionsblock umfassende Block der gegenüber der zweiten Ebene nächsthöheren Ebene sowie alle diesem Block zugeordneten Blöcke in der zweiten Region liegen.

4. Verfahren nach Anspruch 3, **dadurch gekennzeichnet, dass** es mindestens zwei Sorten von Definitionsblöcken gibt, wobei eine Sorte ausgezeichneter Definitionsblöcke definiert ist, wobei in dem Fall, dass der erste Definitionsblock ein ausgezeichneter Definitionsblock ist, die erste Region und die zweite Region zu einer gemeinsamen Region zusammengefasst werden, und wobei ansonsten die erste Region und die zweite Region als getrennte Regionen behandelt werden.

5. Verfahren nach einem der Ansprüche 2 bis 4, **dadurch gekennzeichnet, dass** der Bezeichner einer Blockvariable anhand einer Auswertung von mindestens einer Erzeugungsvorschrift bestimmt wird, wobei die Erzeugungsvorschrift den Bezeichner der Blockvariable anhand des Blocks einer höheren Ebene, in welchen der die Blockvariable aufweisende Block umfasst ist, und/oder anhand der Region, in welcher der die Blockvariable aufweisende Block liegt, bestimmt, und dass die Überprüfung, ob zwei Blöcke in der gleichen Region liegen, anhand eines Vergleichs der Bezeichner der Blockvariablen erfolgt.

6. Verfahren nach einem der vorhergehenden Ansprüche, **dadurch gekennzeichnet, dass** vordefinierte Blöcke, welche eine Funktionalität bereitstellen, aus einer Bibliothek in das Blockdiagramm eingefügt werden können, wobei mehrere Blöcke mit der gleichen Funktionalität in dem Blockdiagramm vorhanden sein können, wobei in dem Fall, dass mehrere Instanzen eines Blocks in dem Blockdiagramm vorhanden sind, entweder für jede Instanz eine unabhängige Region definiert wird, oder für die Instanzen eine gemeinsame Funktion und für jede Instanz eine Datenstruktur mit den Blockvariablen definiert werden, wobei je nach auszuführendem Block die entsprechende Datenstruktur an die Funktion übergeben wird.

7. Verfahren nach einem der vorhergehenden Ansprüche, **dadurch gekennzeichnet, dass** jede Blockvariable eine Zulässigkeitsmarkierung aufweist, welche gesetzt oder nicht gesetzt sein kann, und wobei zwei Blockvariablen nur dann in einer gemeinsamen Variable implementiert werden, wenn in beiden Blockvariablen die Zulässigkeitsmarkierung gesetzt ist.

8. Verfahren nach Anspruch 7, **dadurch gekennzeichnet, dass** jede Blockvariable mindestens eine Prüfmarkierung aufweist, welche gesetzt oder nicht gesetzt sein kann, und wobei zwei Blockvariablen nur dann in einer gemeinsamen Variable implementiert werden, wenn in beiden Blockvariablen die Prüfmarkierung gesetzt ist und zusätzlich mindestens eine der Prüfmarkierung zugeordnete Prüfbedingung erfüllt ist, wobei eine oder mehrere der folgenden Prüfbedingungen überprüft werden:
• Ob die Blockvariablen innerhalb des Blocks nicht verändert, sondern nur ausgelesen werden
• Ob die Lebensdauern verschiedener Instanzen der Blockvariablen disjunkt sind, so dass die zwei Blockvariablen nur zu unterschiedlichen, nicht überlappenden Zeiten gelesen oder geschrieben werden
• Ob den Blockvariablen in einer Definitionsdatensammlung dieselbe Variablendefinition zugeordnet ist
• Ob die Blockvariablen an einer gleich spezifizierten gerichteten Verbindung angeordnet sind.

9. Verfahren nach Anspruch 7 oder 8, **dadurch gekennzeichnet, dass** einer Blockvariablen eine oder mehrere Parameter zugeordnet werden, wobei zwei Blockvariablen nur dann in einer gemeinsamen Variable implementiert werden, wenn eine oder mehrere der folgenden Zusatzbedingungen erfüllt ist:
• Den Blockvariablen wurde derselbe Datentyp zugeordnet
• Den Blockeinheiten wurden miteinander verträgliche Maßeinheiten zugeordnet
• Die Namen von Blockvariablen werden mittels Erzeugungsvorschriften bestimmt, wobei nur solche Blockvariablen zusammengefasst werden, deren Namen mit der gleichen Erzeugungsvorschrift bestimmt wurde.

10. Verfahren nach einem der vorhergehenden Ansprüche, **dadurch gekennzeichnet, dass** mindestens eine Blockvariable anhand von gerichteten Verbindungen zwischen Blöcken automatisch erzeugt wird, wobei für den Fall, dass ein erster Block mit einem zweiten Block und der zweite Block mit einem dritten Block verbunden ist, eine Blockvariable des ersten Blocks für die von dem ersten Block ausgehende Verbindung erzeugt wird und eine Blockvariable des zweiten Blocks für die von dem zweiten Block ausgehende Verbindung erzeugt wird, wobei die zwei Blockvariablen dann als eine gemeinsame Variable in dem Quellcode implementiert werden, wenn der erste Block und der zweite Block in der gleichen Region liegen.

11. Verfahren nach einem der vorhergehenden Ansprüche, **dadurch gekennzeichnet, dass** das Blockdiagramm einen oder mehrere Definitionsblöcke umfasst, welche eine Region definieren wobei Blöcke, welche nicht in einer von einem Definitionsblock aufgespannten Region liegen, einer zusätzlichen Region zugeordnet werden, so dass jeder Block des Blockdiagramms in einer Region liegt und/oder dass eine Trennungsregion definiert ist, wobei die Blockvariablen von Blöcken, die in der Trennungsregion liegen, immer als getrennte Variablen im Quellcode implementiert sind.

12. Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Einlesen eines Blockdiagramms,
b. Erzeugen eines Quellcodes mit einem Verfahren nach einem der vorhergehenden Ansprüche,
c. Kompilieren des Quellcodes für die Recheneinheit, so dass ein ausführbarer Code erzeugt wird,
d. Übertragen des ausführbaren Code auf das Steuergerät, und
e. Hinterlegen des ausführbaren Codes auf einem nichtflüchtigen Speicher des Steuergeräts und/oder Ausführen des ausführbaren Codes durch die Recheneinheit des Steuergeräts.

13. Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein Verfahren gemäß einem der vorhergehenden Ansprüche auszuführen.

14. Computersystem umfassend eine Mensch-Maschine-Schnittstelle, einen nichtflüchtigen Speicher und einen Prozessor, wobei der Prozessor dazu eingerichtet ist, ein Verfahren nach einem der Ansprüche 1 bis 12 auszuführen.
